# EUROPEAN PATENT APPLICATION

(11) **EP 1 741 485 A1**
(43) Date of publication of application: **10.01.2007**
(21) Application number: 05721516.2
(22) Date of filing: 25.03.2005
(51) Int. Cl.: B01J 19/12

(54) **PHOTOREACTIVE THIN FILM PROCESSING METHOD AND PHOTOREACTIVE THIN FILM PROCESSING APPARATUS**

(30) Priority: 27.03.2004 JP 2004127363
(71) Applicant: NIIGATA TECHNOLOGY LICENSING ORGANIZATION, Niigata-shi Niigata 950-2102 (JP)
(72) Inventor: KANEKO, Futao c/o Faculty of Engineering, Niigata, Niigata-shi, Niigata 9502102 (JP); OHDAIRA, Yasuo c/o Faculty of Engineering,, Niigata-shi, Niigata 9502102 (JP); KATO, Keizo c/o Faculty of Engineering, Niigata, Niigata 9502102 (JP); SHINBO, Kazunari c/o Faculty of Engineering,, Niigata-shi, Niigata 9502102 (JP); KAWAKAMI, Takahiro c/o Faculty of Engineering,, Niigata-shi, Niigata 9502102 (JP)
(74) Representative: HOFFMANN EITLE
(86) International application number: PCT/JP2005/005589
(87) International publication number: WO 2005/092490

(57) **Abstract**

A photoreactive thin film processing method is provided that can process a photoreactive thin film having a desired structure and physical characteristics by feeding back the light incidence angle, light intensity, light irradiation time, state of the polarized light, and various other characteristics observed via the probe. In the method for processing a photoreactive thin film 1 disposed directly on or in close proximity to the surface of the prism 3 by using a composite surface electromagnetic field formed by the interference of two evanescent waves produced by the total reflection of two laser light beams on the surface of the prism 3, the structure or physical properties are controlled and the photoreactive thin film 1 is processed by disposing a probe 4 of a scanning probe microscope on the surface of the photoreactive thin film 1, observing on site the spatial structure, electrical characteristics, optical characteristics, electroconductive characteristics, and other structural or physical properties of the thin film 1 undergoing processing in a region at or below the half-wavelength of the light before, after, or during processing, and controlling the laser light on the basis of observed signals from the scanning probe microscope.

## Description

### TECHNICAL FIELD

The present invention relates to a photoreactive thin film processing method and device in which a probe microscope is used in photoreactive thin film processing, wherein the interference of evanescent waves of a prism surface is used.

### BACKGROUND ART

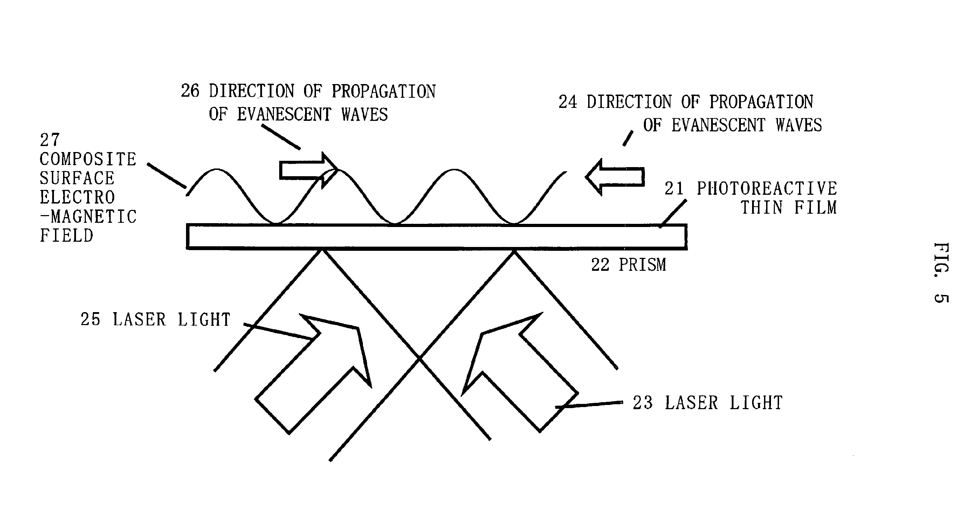

A method for machining photoreactive thin films by using evanescent wave interference is described in a foreign document, Ramanujam, P.S., Optics Letters, 28, 2375 (2003), for example. To process a photoreactive thin film by using evanescent wave interference, a photoreactive thin film 21 is commonly formed on a prism, the thin film is arranged on the surface of a prism 22, and laser light 23 is caused to be incident and totally reflected, whereby an evanescent wave produced by the laser light 23 is transmitted in a direction 24, laser light 25 is caused to enter the other symmetrical prism side surface and is totally reflected in the same region of the prism surface to propagate an evanescent wave in a direction 26 to cause the two evanescent waves to interfere on the prism surface and form a composite surface electromagnetic field 27, as shown in FIG. 5. The period of the intensity distribution of the composite surface electromagnetic field 27 of the evanescent waves is a result of the total reflection phenomenon and is less than 1/2 the free space wavelength of the laser light, depending on the incidence angle and the refractive index of the prism. The period can be further reduced by increasing the incidence angle and the refractive index of the prism. The interaction between the standing wave (composite surface electromagnetic field 27) and the photoreactive thin film 21 allows the spatial structure or the dielectric characteristics of the thin film to be transformed to a shape that corresponds to the spatial intensity distribution of the standing wave.
[Non-patent Document 1] Foreign Document: Ramanujam, P.S., Optics Letters, 28, 2375 (2003)

In the method for processing a photoreactive thin film by using evanescent wave interference, a grid-shaped structure corresponding to the interference pattern or a dielectric characteristics distribution is formed. Conventionally, the shape or dielectric characteristics are commonly measured by introducing external laser light and using the light as a probe, and making use of the diffraction phenomenon of light to make observations from the diffraction pattern.

However, when a complex spatial structure has been constructed, it is difficult to distinguish the structure from the diffraction pattern, and since light is used as a probe, electrical conductivity and other electrical characteristics cannot be observed. There is also a drawback in that the spatial resolution of the measurement is limited by the diffraction limit of light.

Also, since there is an optical system in the free space on a photoreactive thin film, the probe needle of a scanning probe microscope cannot be disposed on the photoreactive thin film.

An object of the present invention is to provide a photoreactive thin film processing method and device wherein the probe of a scanning probe microscope is disposed on the surface of the photoreactive thin film to allow the spatial structure, electrical characteristics, optical characteristics, electroconductive characteristics, and other structural or physical properties of the thin film in a region at or below the half-wavelength of the light to be observed before, after, or during processing and to feed back the characteristics observed via the probe such as the light incidence angle, light intensity, light irradiation time and light polarization state to the probe, whereby a photoreactive thin film having the desired characteristics can be processed.

### DISCLOSURE OF THE INVENTION

The main points of the present invention are described below with reference to the attached drawings.

The present invention relates to a method for processing a photoreactive thin film 1 disposed directly on or near a surface of a prism 3 by using a composite surface electromagnetic field formed by interference of two evanescent waves produced by total reflection of two laser light beams on the surface of the prism 3. The method is characterized by comprising a step for disposing a probe 4 of a scanning probe microscope on the surface of the photoreactive thin film 1; a step for observing on site the spatial structure, electrical characteristics, optical characteristics, electroconductive characteristics, and other structural or physical properties of the thin film 1 undergoing processing in a region at or below the half-wavelength of the light before, after, or during processing; and a step for controlling the structural or the physical properties by controlling the laser light on the basis of the observed signals of the scanning probe microscope, and processing the photoreactive thin film 1.

In the first aspect of the invention, a second aspect of the invention is characterized by providing incidence angle adjustment means 7 for adjusting the incidence angle of the incident laser light and reflected laser light using a composite surface electromagnetic field in which two evanescent waves, which are an evanescent wave generated by total reflection on the prism 3 surface in which one of the laser light beams is used as incident laser [light], and an evanescent wave generated by again totally reflecting reflected laser light in which laser light totally reflected at the prism 3 surface is reflected back by a mirror 8 disposed outside the prism 3, are made to interfere on the surface of a prism 3; and phase control adjustment means 9 for adjusting the spatial phase of reflected laser light and adjusting the spatial position of the composite surface electromagnetic field; wherein the incidence angle adjustment means 7 or the phase control adjustment means 9 is controlled based on signals of the scanning probe microscope to obtain a thin film 1 endowed with a desired structure and physical properties.

In the first or second aspect of the invention, a third aspect of the invention is characterized by providing luminous energy adjustment means 12 and polarized light adjustment means 11 for adjusting the intensity of the incident laser light or the light irradiation time, and polarized light, wherein the luminous energy adjustment means 12 or the polarized light adjustment means 11 is controlled based on signals of the scanning probe microscope to obtain a thin film 1 endowed with a desired structure and physical properties.

In one of the first to third aspects of the invention, a fourth aspect of the invention is characterized in that the distal end of the probe 4 of the scanning probe microscope is brought into close contact with a surface of the thin film 1 that has been processed by interference of the evanescent waves, and the thin film 1 is additionally processed by using near-field light generated at the distal end of the probe 4.

In one of the first to fourth aspects of the invention, a fifth aspect of the invention is characterized in that the photoreactive thin film 1 on the prism 3 surface is disposed directly on the prism 3 or is disposed on a glass substrate 2 having a refractive index that is approximately equal to the refractive index of the prism 3, and the glass substrate 2 is laminated to the prism 3.

In one of the first to fourth aspects of the invention, a sixth aspect of the invention is characterized in that the photoreactive thin film 1 is not disposed directly on the prism 3 but is disposed on a substrate 2 having an arbitrary refractive index, the surface of the photoreactive thin film 1 is made to face the prism 3 surface side and is placed in proximity at a distance 1/10 to 1 wavelength of the incident laser light, and the photoreactive thin film 1 on the substrate 2 is processed using a composite surface electromagnetic field produced by the interference of the evanescent waves formed on the prism 3 surface.

The present invention relates to a device for processing a photoreactive thin film 1 disposed directly on or near a surface of a prism 3 by using a composite surface electromagnetic field formed by interference of two evanescent waves produced by total reflection of two laser light beams on the surface of the prism 3. The device is characterized by comprising a probe 4 of a scanning probe microscope disposed on the surface of the photoreactive thin film 1; and a controller for observing on site the spatial structure, electrical characteristics, optical characteristics, electroconductive characteristics, and other structural or physical properties of the thin film 1 undergoing processing in a region at or below the half-wavelength of the light in the scanning probe microscope before, after, or during processing, and for controlling the structural or the physical properties by controlling the laser light on the basis of the observed signals of the scanning probe microscope, and processing the photoreactive thin film 1.

In the seventh aspect of the invention, an eighth aspect of the invention is characterized by comprising incidence angle adjustment means 7 for adjusting the incidence angle of the incident laser light and reflected laser light, configured so that a composite surface electromagnetic field is generated in which two evanescent waves, which are an evanescent wave generated by total reflection on the prism 3 surface in which one of the laser light beams is used as incident laser [light], and an evanescent wave generated by again totally reflecting reflected laser light in which laser light totally reflected at the prism 3 surface is reflected back by a mirror 8 disposed outside the prism 3, are made to interfere on the surface of a prism 3; and phase control adjustment means 9 for adjusting the spatial phase of reflected laser light and adjusting the spatial position of the composite surface electromagnetic field; wherein the controller is configured so that the incidence angle adjustment means 7 or the phase control adjustment means 9 is controlled based on signals of the scanning probe microscope to obtain a thin film 1 endowed with a desired structure and physical properties.

In the seventh or eighth aspect of the invention, a ninth aspect of the invention is characterized by comprising luminous energy adjustment means 12 and polarized light adjustment means 11 for adjusting the polarization and the intensity of the incident laser light or the light irradiation time, wherein the luminous energy adjustment means 12 or the polarized light adjustment means 11 is controlled based on signals of the scanning probe microscope to obtain a thin film 1 endowed with a desired structure and physical properties.

In one of the seventh to ninth aspects of the invention, a tenth aspect of the invention is characterized in that the distal end of the probe 4 of the scanning probe microscope is disposed in close proximity to the thin film 1 surface that has been processed by interference of the evanescent waves, and is configured so as to additionally process the thin film 1 by using near-field light generated at the distal end of the probe 4.

In one of the seventh to tenth aspects of the invention, an eleventh aspect of the invention is characterized in that the photoreactive thin film 1 disposed on the prism 3 surface is disposed directly on the prism 3 or is disposed on a glass substrate 2 having a refractive index that is approximately equal to the refractive index of the prism 3, and the glass substrate 2 is laminated to the prism.

In one of the seventh to tenth aspects of the invention, a twelfth aspect of the invention is characterized in that the photoreactive thin film 1 is not disposed directly on the prism 3 but is disposed on a substrate 2 having an arbitrary refractive index, the surface 2 of the photoreactive thin film 1 is made to face the prism 3 surface side and is placed in proximity at a distance 1/10 to 1 wavelength of the incident laser light, and the photoreactive thin film 1 on the substrate 2 is processed using a composite surface electromagnetic field produced by the interference of the evanescent waves formed on the prism 3 surface.

In accordance with the configuration of the present invention described above, a photoreactive thin film processing method and device can be provided in photoreactive thin film processing that uses the interference of two evanescent waves whereby the spatial structure, electrical characteristics, optical characteristics, electroconductive characteristics, and other structural or physical properties of the thin film in a region at or below the half-wavelength of the light can be observed before, after, or during processing by disposing the probe of a scanning probe microscope on the surface of a photoreactive thin film; and a photoreactive thin film having a desired structure or physical properties can be processed by feeding back the various characteristics, e.g., light incidence angle, light intensity, and light polarization state observed by the probe.

In accordance with the first and seventh aspects of the invention, the shape, magnetic characteristics, optical characteristics, and electrical characteristics of the structure on the surface of the photoreactive thin film can be observed at a resolution of several nanometers by using as the scanning probe microscope a scanning tunneling microscope (STM), an atomic force microscope (AFM), a magnetic force microscope (MFM), and a scanning near-field optical microscope (SNOM). Therefore, a novel photoreactive thin film processing method and device can be provided whereby a thin film can be observed and evaluated before, after, and during processing by disposing a probe on the photoreactive thin film.

In accordance with the second and eighth aspects of the invention, a composite surface electromagnetic field is used in which an evanescent wave generated by causing laser light that enters the prism from the exterior to undergo total reflection within a prism, and an evanescent wave generated by again totally reflecting reflected laser light in which laser light totally reflected at the prism surface is reflected back by a mirror disposed outside the prism, are made to interfere on the surface of a prism. Therefore, the dimensions and spatial position of the interference pattern of the composite surface electromagnetic field can be adjusted by adjusting the angle of incidence of the incident laser light and the reflected laser light with the aid of an incidence angle adjustment unit, and by adjusting the spatial phase of reflected laser light with the aid of a phase control adjustment unit. A novel photoreactive thin film processing method and device can therefore be provided whereby a thin film can be processed and endowed with a desired shape or physical properties by making a comparison of a target value of the surface shape that has been input in advance and a probe signal that corresponds to a surface shape measured using a scanning probe microscope disposed on the thin film, inputting the result to a control signal generator, and providing feedback to the incidence angle adjustment unit and the phase control adjustment unit.

In accordance with the third and ninth aspects of the invention, the intensity of the incident laser light and the light irradiation time can be adjusted by a luminous energy adjustment mechanism, and the light polarization of the incident laser light can be adjusted by a polarized light adjustment mechanism. A novel photoreactive thin film processing method and device can therefore be provided wherein a thin film can be processed and endowed with a desired shape or physical properties by making a comparison of a target value of the surface shape that has been input in advance and a probe signal that corresponds, for example, to the spatial structure or the magnetic, optical, and electroconductive characteristics measured by the scanning probe microscope disposed on the thin film, and providing feedback to the luminous energy adjustment mechanism and the polarized light adjustment mechanism.

In accordance with the fourth and tenth aspects of the invention, the distal end of the probe is brought into close contact with the surface of a thin film that has been processed by evanescent wave interference, and near-field light is produced at the distal end of the probe which has irradiated light. Therefore, a novel photoreactive thin film processing method and device can be provided that allow a thin film to be additionally processed at a resolution of several nanometers.

### BRIEF DESCRIPTION OF THE DRAWINGS

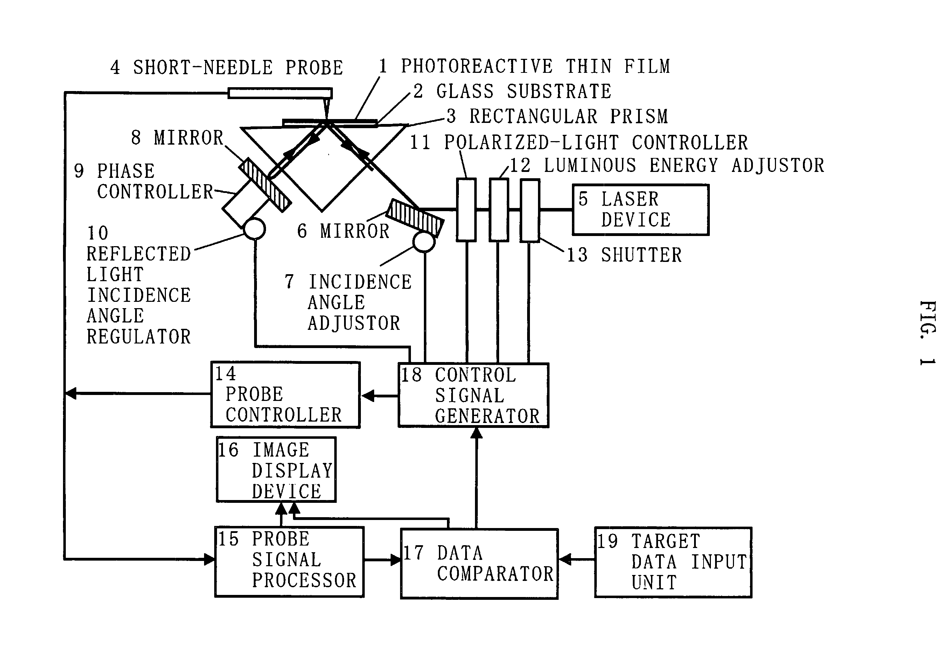

FIG. 1 is a system block diagram showing a photoreactive thin film processing apparatus in which the evanescent wave interference method of the present embodiment is used;

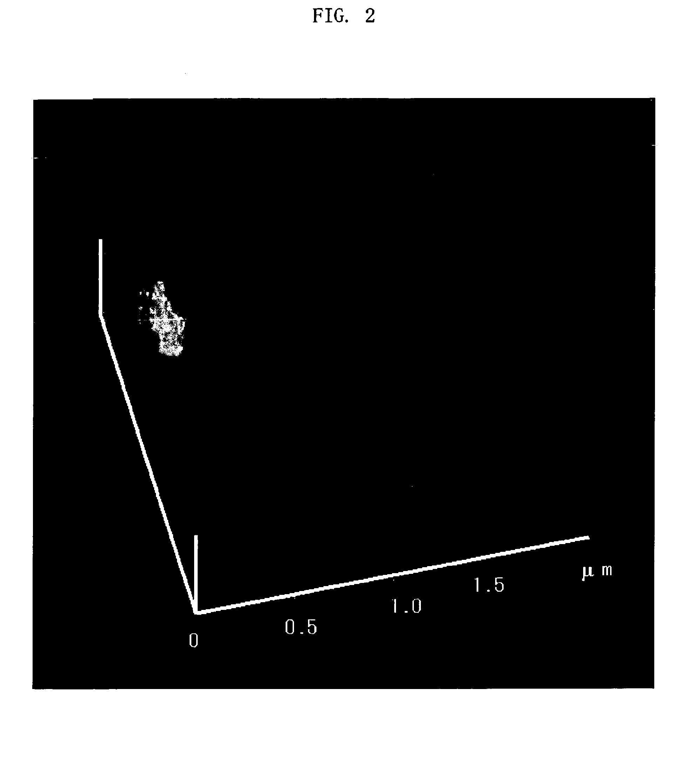

FIG. 2 is a photomicrograph in which the incident laser light of the present embodiment is elliptically polarized light, and which is obtained by the onsite observation of a surface shape taken with an interatomic force microscope after irradiating a composite surface electromagnetic field for 10 minutes on an azo-dye molecular thin film;

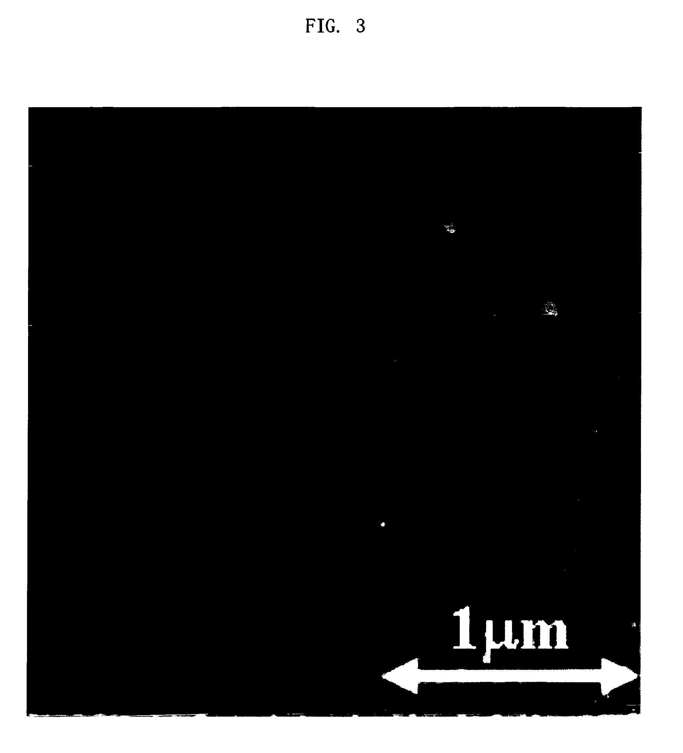

FIG. 3 is a photomicrograph in which the electric field components of the incident laser light of the present embodiment are made parallel to the incident plane, and which is obtained by the onsite observation of a surface shape taken with an interatomic force microscope after irradiating a composite surface electromagnetic field for 10 minutes on an azo-dye molecular thin film;

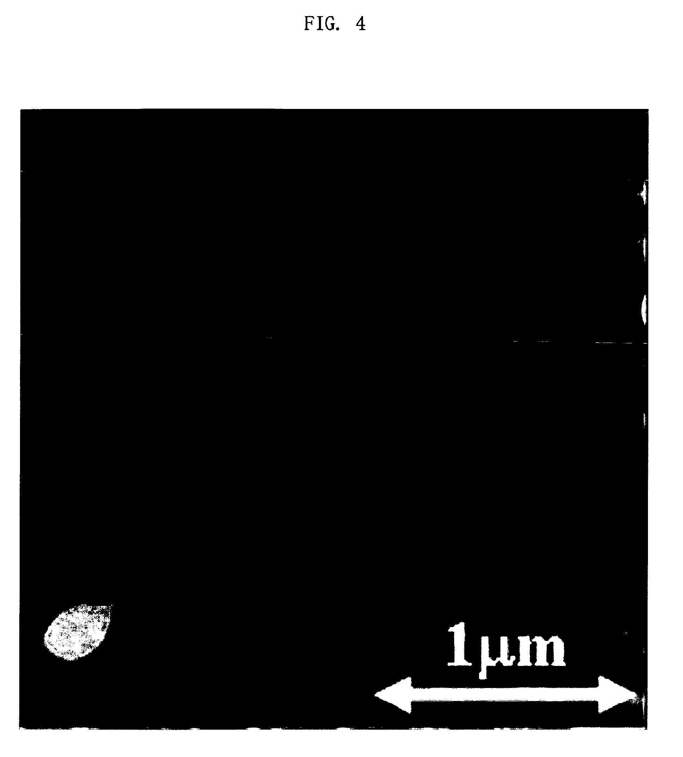

FIG. 4 is a photomicrograph in which the electric field components of the incident laser light of the present embodiment are made perpendicular to the incident plane, and which is obtained by the onsite observation of a surface shape taken with an interatomic force microscope after irradiating a composite surface electromagnetic field for 10 minutes on an azo-dye molecular thin film; and
FIG. 5 is an explanatory drawing that shows a photoreactive film processing method in which evanescent wave interference is used in a conventional manner.

### BEST MODE FOR CARRYING OUT THE INVENTION

Preferred embodiments (the manner in which the present invention is implemented) of the present invention are briefly described below with reference to the diagrams while indicating the effects of the present invention.

A composite electromagnetic field produced by evanescent wave interference is generated on a prism surface by the total reflection of laser light inside the prism, and since the light is present in the region approximately equal to the wavelength of the prism surface, the distal end of a probe of a scanning probe microscope can be disposed on a photoreactive thin film without disturbing the optical path. The structure on the photoreactive thin film or the magnetic characteristics, optical characteristics, electroconductive characteristics, and other physical characteristics of the film can be controlled by adjusting the intensity of the incident laser light and the light irradiation time and polarization of the light.

Therefore, in accordance with the first and seventh aspects of the invention, the shape of the structure on the surface of the photoreactive thin film or the magnetic, optical, and electrical characteristics of the film can be observed at a resolution of several nanometers by using as the scanning probe microscope a scanning tunneling microscope (STM), an atomic force microscope (AFM), a magnetic force microscope (MFM), and a scanning near-field optical microscope (SNOM). Therefore, a thin film can be observed and evaluated before, after, and during processing by disposing a probe on the photoreactive thin film.

In accordance with the second and eighth aspects of the invention, a composite surface electromagnetic field is used in which an evanescent wave generated by totally reflecting within a prism laser light that enters the prism from the exterior, and an evanescent wave generated by again totally reflecting reflected laser light in which laser light totally reflected at the prism surface is reflected back by a mirror disposed outside the prism, are made to interfere on the surface of a prism. Therefore, the dimensions and spatial position of the interference pattern of the composite surface electromagnetic field can be adjusted by adjusting the angle of incidence of the incident laser light and the reflected laser light with the aid of an incidence angle adjustment unit, and by adjusting the spatial phase of reflected laser light with the aid of a phase control adjustment unit. A thin film can therefore be processed and endowed with a desired shape by making a comparison of a target value of the surface shape that has been input in advance and a probe signal that corresponds to a surface shape measured using a scanning probe microscope disposed on the thin film, inputting the result to a control signal generator, and providing feedback to the incidence angle adjustment unit and the phase control adjustment unit.

In accordance with the third and ninth aspects of the invention, the intensity of the incident laser light and the light irradiation time can be adjusted by a luminous energy adjustment mechanism, and the light polarization of the incident laser light can be adjusted by a polarized light adjustment mechanism. A thin film can therefore be processed and endowed with a desired shape or physical properties by making a comparison of a target value of the surface shape that has been input in advance, and a probe signal that corresponds, for example, to the spatial structure or the magnetic, optical, and electroconductive characteristics measured by the scanning probe microscope disposed on the thin film, and providing feedback to the luminous energy adjustment mechanism and the polarized light adjustment mechanism.

In accordance with the fourth and tenth aspects of the invention, the distal end of the probe can be brought into close contact with the surface of a thin film that has been processed by evanescent wave interference, and near-field light produced at the distal end of the light-irradiated probe can be used. Therefore, a thin film can be additionally processed at a resolution of several nanometers.

The photoreactive molecular thin film is not limited to being directly disposed on the prism, but may also be disposed on a glass substrate having a refractive index that is approximately equal to the refractive index of the prism, and the glass substrate is placed in contact with the surface of the prism. In such a case, the laser light that is incident on the surface of the prism from within the prism enters the glass substrate unchanged, and is totally reflected at the surface of the glass substrate, and evanescent waves can be formed on the surface of the glass substrate.

When the photoreactive thin film is disposed on a substrate having an arbitrary index of refraction, a photoreactive molecular thin film can be processed using a composite surface electromagnetic field produced by the interference of evanescent waves formed on the surface of the prism. This is achieved by making the surface of the photoreactive thin film face the prism surface side and placing the film in close proximity at a distance 1/10 to 1 wavelength of the incident laser light from the surface of the prism.

### [Examples]

Examples of the present invention are described below with reference to the diagrams.

The present inventors experimentally confirmed that a photoreactive molecular thin film disposed on the surface of a prism can be processed at dimensions equal to or less than the half-wavelength of incident laser light by using a composite surface electromagnetic field formed by the interference of two evanescent waves produced by the total reflection of laser light on the surface of the prism, and that the processed thin film can be simultaneously observed by further disposing a scanning probe microscope on the thin film. It was also confirmed that the shape and dimensions of the nanostructure formed on the thin film can be controlled by adjusting the intensity of the incident light, the irradiation time, and the polarization of the light. The present invention was contrived based on these empirical facts.

FIG. 1 is a system block diagram of a photoreactive thin film processing device comprising a probe 4 for observing the structure and properties of the surface of a photoreactive thin film of the present example, and a controller for feeding the signals back to control the processing and to impart (by feedback) a desired structure and properties.

In the photoreactive thin film processing device shown in FIG. 1, incident laser light emitted from a laser device 5 is totally reflected by a glass substrate 2 for bonding a photoreactive thin film 1 and a rectangular prism 3, and an evanescent wave is generated. The device comprises an incidence angle regulator 7 (incidence angle adjustment means 7) for adjusting the incidence angle of the incident laser light; a luminous energy adjuster 12 (luminous energy adjustment means 12), a shutter 13, and a light polarization controller 11 (light polarization adjustment means 11) for adjusting the intensity, irradiation time, and polarization of the incident laser light; a mirror 8 for causing laser light reflected by the prism 3 to reenter the prism; a phase controller 9 (phase control adjustment means 9) for adjusting the spatial phase of the mirror; a reflected light incidence angle regulator 10 for adjusting the incidence angle of reflected laser light; a short-needle probe 4 (probe 4 of the scanning probe microscope) for observing the spatial structure or the electrical characteristics, optical characteristics, and electroconductive characteristics of the thin film undergoing processing; a probe controller 14 for electrically controlling the position of the short-needle probe 4; a probe signal processor 15 for electrically processing signals from the probe; a target data input unit 19 for inputting thin film processing conditions; a data comparator 17 for comparing the target data and the probe signals and generating signals that correspond to errors in the desired shape and characteristics; and a control signal generator 18 for converting the signals to feedback signals.

Described next is the operation of the photoreactive thin film processing device configured in the manner described above.

In FIG. 1, the laser device 5, which is a continuous or pulsed oscillation laser light, emits incident laser light to a prism. The intensity of the incident laser light is adjusted by the luminous energy adjuster 12 composed of a filter or other component capable of controlling the transmissivity by way of an electromotive mechanism, and the polarization of the light is thereafter adjusted using the electrically-controllable light polarization controller 11, which is composed of a waveguide plate, a linear polarization plate, and an optoacoustic element. The incident laser light from a mirror 6 is reflected and made to enter the rectangular prism 3 (hereinafter referred to as "prism") at an incidence angle that is equal to or greater than the angle that satisfies the conditions for total reflection. In this case, the mirror 6 is mounted on the incidence angle regulator 7, the angle of the mirror can be adjusted, and the angle of the incident light to the prism is adjusted.

The processed photoreactive thin film is formed, for example, by spin coating or another method on the prism surface or on one surface of a glass substrate having an index of refraction that is approximately equal to that of the prism. In this case, for example, the glass surface on the opposite side of the surface on which the film is formed by matching oil is bonded to the surface of the prism. At this point, when incident laser light enters the prism, an evanescent wave is formed on the surface of the prism or on the surface of the glass substrate, and the incident laser light is reflected inside the prism by total reflection and passes unchanged as reflected laser light to the exterior of the prism. The reflected laser light that has reached the exterior of the prism follows an optical path inverted by the mirror 8, whose angle can be adjusted by the reflected light incidence angle regulator 10, is made to again enter the prism, and is totally reflected by surface of the prism or the glass substrate to again form an evanescent wave. At this point, the propagation direction of the evanescent wave generated by the incident laser light and the propagation direction of the evanescent wave generated by the reflected light are made to face each other, the intensity distribution is generated in accordance with the grid pattern of the composite surface electromagnetic field generated by the interference of the two evanescent waves on the prism or the glass substrate, and the photoreactive thin film is processed thereby. In this case, the dimensions of the interference pattern are controlled by selecting the incidence angles of the incident laser light and the reflected laser light and adjusting the wavelength of the evanescent waves. The spatial phase of the reflected laser light that is made to reenter the prism can be selected by adjusting the position of the mirror with the aid of a phase controller composed, for example, of a piezoelectric element mounted on the mirror 8, and the spatial position of the interference pattern of the composite surface electromagnetic field can be determined.

It is possible to process the photoreactive thin film while adjusting the state of polarization of the incident laser light for the polarized light of the electric field component parallel to a plane (hereinafter referred to as "incident plane") formed by the optical paths of the incident light and the reflected light, the polarized light of the component perpendicular to the incident plane, and the polarized light of the mixed state of the electromagnetic fields; modifying the spatial intensity distribution of the composite surface electromagnetic field; and controlling the spatial structure or the magnetic characteristics, dielectric characteristics, and other optical characteristics, and the electrical conductivity and other electrical characteristics of the thin film in accordance with the above parameters.

The point, doughnut, linear, or other processing shape can be controlled by adjusting the light irradiation time and intensity that the composite surface electromagnetic field produced by the interference of the evanescent waves has on the photoreactive thin film. This is achieved by controlling the lighting of the laser light with the aid of the shutter 13, and adjusting the intensity of the laser light with the aid of the luminous energy adjuster 12.

The insertion positions of the light polarization controller 11, luminous energy adjuster 12, and shutter 13 for controlling the incident laser light can be mutually interchanged.

Also, the prism may be any prism in which laser light is totally reflected at the surface of the prism and which has a bilaterally symmetrical shape relative to the plane of the optical path. Examples include a rectangular prism, a semicircular columnar prism, a hemispherical prism, and a pyramid-shaped prism. Any prism can be used as long as the composite surface electromagnetic field generated by the interference of evanescent waves on the prism surface can be formed by returning the reflected light to the same optical path and again totally reflecting the light using a mirror disposed on the side that is opposite from the incident side.

Under these processing conditions, measurements can be performed on site at the same time as the processing at a resolution of several nanometers by using the short-needle probe 4 of a scanning probe microscope disposed on the opposite side from the prism. Examples of the scanning probe microscope that may be used include a scanning tunneling microscope (STM), an atomic force microscope (AFM), a magnetic force microscope (MFM), and a scanning near-field optical microscope (SNOM). Depending on the type of probe that is used, the shape of the structure or the magnetic characteristics, optical characteristics, electroconductive characteristics, and other physical characteristics on the photoreactive thin film can be converted to an image signal by a probe signal processor 15 and evaluated in real time through the use of an image display device 16.

Furthermore, by inputting the desired processing characteristics from the target data input unit 19, storing the characteristics in the memory housed in the data comparator 17, and comparing the characteristics with the signals from the probe signal processor 15, it is possible to calculate the difference with the target values and to input the difference to the control signal generator 18 as a difference signal. The control signal generator converts the difference signal to a control signal that is fed back to the incidence angle regulator 7, phase controller 9, reflected light incidence angle regulator 10, light polarization controller 11, luminous energy adjuster 12, shutter 13, and probe controller 14. The incidence angle, the phase of the reflected light, the polarization of the incident laser light, the intensity of the light, and the irradiation time of the light are thereby controlled and the molecular thin film is endowed with the desired structural shape or the desired magnetic, optical, and electrical characteristics.

A specific example of the present invention is described below with reference to the diagrams.

An azo-dye molecular (Congo Red) thin film, which is a photoreactive thin film, was formed to a thickness of 40 nm on a glass substrate with an index of refraction of 1.522 and made to adhere to a rectangular prism having the same index of refraction (nₚ = 1.522) as the glass substrate. Incident laser light of an argon laser having a wavelength of 488.0 nm was made incident on the prism at an incidence angle of 45° and totally reflected at the surface of the glass substrate. The reflected light was reflected and returned by a mirror 8 disposed on a side surface symmetrical in relation to the incident side of the prism, and was totally reflected again at the same position. Interference of evanescent waves was formed on the surface of the glass substrate on the prism, and the azo-dye thin film was processed. As an example in which the shape of a molecular thin film surface was observed on site, the cantilever of an atomic force microscope (AFM), which is a scanning probe microscope, was disposed above the photoreactive molecular thin film.

FIGS. 2, 3, and 4 are examples of the results obtained when an AFM probe on a thin film was used to measure surface shapes produced by irradiation with laser light for 10 minutes, wherein the incident laser light is elliptically polarized (FIG. 2), the electric field components are made parallel to the incident plane (FIG. 3), and the electric field components are made perpendicular to the incident plane (FIG. 4). In this case, the incidence angles of the incident laser light and the reflected light in relation to the prism were both kept at 45° by using a rectangular prism. At this point, a surface structure was formed having a periodic structure of about 220 nm, which corresponds to the theoretical interval (224 nm) × (√2/1.522) of the grid-shaped light intensity pattern in a composite surface electromagnetic field. A doughnut-shaped, dot-shaped, or linear surface structure is furthermore formed in accordance with the type of polarized light.

## Claims

1. A method for processing a photoreactive thin film disposed directly on or near a surface of a prism by using a composite surface electromagnetic field formed by interference of two evanescent waves produced by total reflection of two laser light beams on the surface of the prism, said method **characterized by** comprising:
a step for disposing a probe of a scanning probe microscope on the surface of said photoreactive thin film;
a step for observing on site the spatial structure, electrical characteristics, optical characteristics, electroconductive characteristics, and other structural or physical properties of the thin film undergoing processing in a region at or below the half-wavelength of the light before, after, or during processing; and
a step for controlling said structural or said physical properties by controlling said laser light on the basis of the observed signals of said scanning probe microscope, and processing the photoreactive thin film.

2. The method for processing a photoreactive thin film according to claim 1, **characterized by** providing:
incidence angle adjustment means for adjusting the incidence angle of said incident laser light and reflected laser light using a composite surface electromagnetic field in which two evanescent waves, which are an evanescent wave generated by total reflection on said prism surface in which one of said laser light beams is used as incident laser light, and an evanescent wave generated by again totally reflecting reflected laser light in which laser light totally reflected at the prism surface is reflected back by a mirror disposed outside the prism, are made to interfere on the surface of a prism; and
phase control adjustment means for adjusting the spatial phase of reflected laser light and adjusting the spatial position of the composite surface electromagnetic field; wherein
said incidence angle adjustment means or said phase control adjustment means is controlled based on signals of said scanning probe microscope to obtain a thin film endowed with a desired structure and physical properties.

3. The method for processing a photoreactive thin film according to claim 1 or 2, **characterized by** comprising:
luminous energy adjustment means and polarized light adjustment means for adjusting the intensity of said incident laser light or the light irradiation time, and polarized light, wherein
said luminous energy adjustment means or said polarized light adjustment means is controlled based on signals of said scanning probe microscope to obtain a thin film endowed with a desired structure and physical properties.

4. The method for processing a photoreactive thin film according to any of claims 1 to 3, **characterized in that**
the distal end of the probe of said scanning probe microscope is brought into close contact with a surface of said thin film that has been processed by interference of said evanescent waves; and
the thin film is additionally processed by using near-field light generated at the distal end of the probe.

5. The method for processing a photoreactive thin film according to any of claims 1 to 4, **characterized in that**
the photoreactive thin film disposed on said prism surface is disposed directly on said prism or is disposed on a glass substrate having a refractive index that is approximately equal to the refractive index of the prism; and
the glass substrate is laminated to the prism.

6. The method for processing a photoreactive thin film according to any of claims 1 to 4, **characterized in that**
said photoreactive thin film is not disposed directly on said prism but is disposed on a substrate having an arbitrary refractive index;
the surface of the photoreactive thin film is made to face said prism surface side and is placed in proximity at a distance 1/10 to 1 wavelength of the incident laser light; and
the photoreactive thin film on said substrate is processed using a composite surface electromagnetic field produced by the interference of said evanescent waves formed on the prism surface.

7. A device for processing a photoreactive thin film disposed directly on or near a surface of a prism by using a composite surface electromagnetic field formed by interference of two evanescent waves produced by total reflection of two laser light beams on the surface of the prism, said device **characterized by** comprising:
a probe of a scanning probe microscope disposed on the surface of said photoreactive thin film; and
a controller for observing on site the spatial structure, electrical characteristics, optical characteristics, electroconductive characteristics, and other structural or physical properties of the thin film undergoing processing in a region at or below the half-wavelength of the light in the scanning probe microscope before, after, or during processing, and for controlling said structural or said physical properties by controlling said laser light on the basis of the observed signals of said scanning probe microscope, and processing the photoreactive thin film.

8. The device for processing a photoreactive thin film according to claim 7, **characterized by** comprising:
incidence angle adjustment means for adjusting the incidence angle of said incident laser light and reflected laser light, configured so that a composite surface electromagnetic field is generated in which two evanescent waves, which are an evanescent wave generated by total reflection on said prism surface in which one of said laser light beams is used as incident laser light, and an evanescent wave generated by again totally reflecting reflected laser light in which laser light totally reflected at the prism surface is reflected back by a mirror disposed outside the prism, are made to interfere on the surface of a prism; and
phase control adjustment means for adjusting the spatial phase of reflected laser light and adjusting the spatial position of the composite surface electromagnetic field; wherein
said controller is configured so that said incidence angle adjustment means or said phase control adjustment means is controlled based on signals of said scanning probe microscope to obtain a thin film endowed with a desired structure and physical properties.

9. The device for processing a photoreactive thin film according to claim 7 or 8, **characterized by** comprising:
luminous energy adjustment means and polarized light adjustment means for adjusting the polarization and the intensity of said incident laser light or the light irradiation time, wherein
said luminous energy adjustment means or said polarized light adjustment means is controlled based on signals of said scanning probe microscope to obtain a thin film endowed with a desired structure and physical properties.

10. The device for processing a photoreactive thin film according to any of claims 7 to 9, **characterized in that** the distal end of the probe of said scanning probe microscope is disposed in close proximity to said thin film surface that has been processed by interference of said evanescent waves, and is configured so as to additionally processes the thin film by using near-field light generated at the distal end of the probe.

11. The device for processing a photoreactive thin film according to any of claims 7 to 10, **characterized in that**
the photoreactive thin film disposed on said prism surface is disposed directly on said prism or is disposed on a glass substrate having a refractive index that is approximately equal to the refractive index of the prism; and
the glass substrate is laminated to the prism.

12. The device for processing a photoreactive thin film according to any of claims 7 to 10, **characterized in that**
said photoreactive thin film is not disposed directly on said prism but is disposed on a substrate having an arbitrary refractive index;
the surface of the photoreactive thin film is made to face said prism surface side and is placed in proximity at a distance 1/10 to 1 wavelength of the incident laser light; and
the photoreactive thin film on said substrate is processed using a composite surface electromagnetic field produced by the interference of said evanescent waves formed on the prism surface.
